# EUROPEAN PATENT SPECIFICATION

(11) **EP 3 858 525 B1**
(45) Date of publication and mention of the grant of the patent: **04.12.2024**
(21) Application number: 21154430.9
(22) Date of filing: 29.01.2021
(51) Int. Cl.: B23C 5/00, B23C 5/10, B23C 5/16

(54) **ROTARY CUTTING TOOL**
ROTIERENDES SCHNEIDWERKZEUG
OUTIL DE COUPE ROTATIF

(30) Priority: 30.01.2020 JP 2020014021
(43) Date of publication of application: 04.08.2021
(73) Proprietor: UNION TOOL CO., Tokyo (JP)
(72) Inventor: SATO, Masayasu, Tokyo (JP); SATAKE, Tomonori, Tokyo (JP)
(74) Representative: Kramer Barske Schmidtchen Patentanwälte PartG mbB

(56) References cited:
- EP-A1- 0 361 027
- EP-A1- 3 348 340
- JP-A- H10 151 513
- JP-U- S5 369 892
- US-A- 4 990 035
- US-A1- 2010 215 447

## Description

### TECHNICAL FIELD

The present invention relates to a rotary cutting tool having a chip breaker groove.

### BACKGROUND ART

A mode employed when processing printed wiring boards using a router is primarily groove processing; therefore, the contact area between an outer peripheral cutting edge and a workpiece increases, the cutting resistance also increasing in concert therewith. Thus, problems are presented in regard to breakage of the tool body or a deterioration in processing precision. As a solution to such problems, in the past, routers provided with chip breaker grooves (also called nick grooves) that partition the outer peripheral cutting edge at an outer peripheral flank face of the tool body have been proposed, as disclosed in, e.g., patent documents 1 and 2.

### [Patent Documents]

Patent Document 1: Microfilm of Japanese Utility Model Application No. S51-165218 (Unexamined Utility Model Specification S53-81987)
Patent Document 2: Japanese Utility Model Laid-open Publication No. H05-78421

EP 3 348 340 A1 discloses a rotary cutting tool.

JP S53 69892 U discloses the preamble of claim 1.

### SUMMARY OF INVENTION

### PROBLEM TO BE SOLVED BY THE INVENTION

To improve processing efficiency, printed wiring boards are sometimes processed with a plurality of material boards in a stacked state, and recently have come to be widely processed under conditions including a further increase in the number of stacked material boards or an increase in the feed rate for the purpose of further improving efficiency. However, through such actions, cutting resistance increases, and problems such as router breakage, chips remaining in the processing path, and a deterioration of processing precision have again been presented.

If the depth of a chip discharge groove is configured so as to become shallower at a base end side of a tool body in relation to a tip end side, it is conceivable that the rigidity of the tool body can be improved. However, in this case, an outer peripheral cutting edge having different rake angles and flank angles between the tip end and base end sides of the tool body is formed, and processing is destabilized, which is a problem.

As with the technology described in Patent Document 1, if the chip breaker groove is configured so as to gradually decrease in depth from the base end side towards the tip end of the tool body, the chip breaker groove will be deeper at the base end side of the tool body, and thus the base end part of the tool body at which the greatest load is applied when processing might decrease in rigidity. Moreover, as with the technology described in Patent Document 2, if the chip breaker groove is configured such that the pitch at which the chip breaker groove is provided gradually increases from the tip end side of the tool body towards the base end side thereof, the rigidity of the base end part of the tool body might be ensured, but the length of each outer peripheral cutting edge increases in association with expansion of the pitch of the chip breaker groove, and the contact area between the outer peripheral cutting edge and the workpiece increases. As a result, even when the chip breaker groove is provided, large cutting resistance is produced, and problems such as deterioration in processing precision occur.

To overcome the problems described above, a demand has arisen for a rotary cutting tool that excels in breakage resistance and chip discharge performance, while providing excellent processing precision with minimal cutting resistance. However, a rotary cutting tool that satisfies all of these requirements does not currently exist.

In view of such current conditions, it is an object of the present invention to provide a rotary cutting tool that excels in breakage resistance and chip discharge performance, and also enables high precision processing with minimal cutting resistance.

### MEANS FOR SOLVING THE PROBLEM

The object is achieved by a rotary cutting tool according to claim 1.

Further improvements and developments are given in the dependent claims.

### EFFECT OF THE INVENTION

In being configured as described above, the present invention provides a rotary cutting tool that excels in breakage resistance and chip discharge performance, and enables high precision processing with low cutting resistance.

Accordingly, even if a printed wiring board is machined with a greater number of stacked material boards or a higher feed rate, any adverse effect due to an increase in cutting resistance can be suppressed as much as possible, and high precision processing can be efficiently implemented.

### BRIEF DESCRIPTION OF THE DRAWINGS

FIG. 1 is a front elevation view showing a present example;
FIG. 2 is an explanatory drawing defining a depth of a chip breaker groove of the present example;
FIG. 3 is a schematic explanatory drawing showing the chip breaker groove of the present example;
FIG. 4 is a schematic explanatory drawing showing the chip breaker groove of the present example;
FIG. 5 is a schematic explanatory drawing showing the chip breaker groove of the present example;
FIG. 6 is a schematic explanatory drawing showing a chip breaker groove of a prior-art example;
FIG. 7 is a table showing the testing conditions and test results of a Test 1;
FIG. 8 is a graph showing the test results of Test 1;
FIG. 9 is a table showing the testing conditions and test results of a Test 2;
FIG. 10 is a graph showing the test results of the Test 2;
FIG. 11 is a photograph showing the test results of a Test 3;
FIG. 12 is a schematic explanatory drawing pertaining to a deviation amount evaluation of a Test 4; and
FIG. 13 is a graph showing the test results of the Test 4.

### MODE FOR CARRYING OUT THE INVENTION

Preferred examples of the present invention are briefly described below with reference to the drawings while indicating the action of the present invention.

By making a groove base end part of a chip breaker groove 4 less deep than at a groove tip end part, the rigidity of a tool body 1 can be improved and breakage of the tool body 1 can be prevented while maintaining an effect of suppressing any increase in cutting resistance through the chip breaker groove 4. In addition, an improvement in processing precision can also be achieved.

Furthermore, the improvement in rigidity enables an increase the volume of a chip discharge groove 2, and therefore a practical rotary cutting tool that can also improve chip discharge performance is achieved.

### [Examples]

Specific examples of the present invention are described on the basis of the drawings.

The present example is a rotary cutting tool R, in which a chip discharge groove 2 assuming in a helical form from a tip end to a base end side of a tool body 1 is formed in an outer periphery of a portion T of the tool body 1, an outer peripheral cutting edge 3 is formed in an intersecting ridgeline part between a rake face of the chip discharge groove 2 and an outer circumferential surface of the portion T the tool body 1 or an outer peripheral flank face formed in the outer periphery of the portion T of the tool body 1, and a chip breaker groove 4 is provided so as to partition the outer peripheral cutting edge 3.

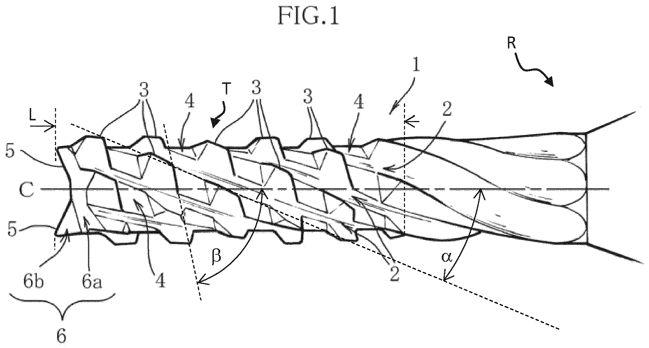

Specifically, as shown in FIG. 1, the present example is a router R that is used primarily in cutting applications such as drilling oblong holes and processing the outer shape of a printed wiring board. In addition to the above-described chip discharge groove 2, rake face, outer peripheral flank face, outer peripheral cutting edge 3 and chip breaker groove 4 provided at the outer periphery of the tool body 1, the router is provided with a bottom edge 5 through the formation of a tip end formation surface 6 at the tip end part of the tool body 1, and is also provided with a shank section (not shown) connected to a tool attachment part of a cutting device for a printed wiring board, the shank section being provided at the base end part. In the present example, two bottom edges 5 are provided by forming a pair of tip end formation surfaces 6 disposed at an interval of 180° around a tool rotary axis C. Therefore, in FIG. 1, the router is shown such that only one tip end formation surface 6 is visible. Moreover, each tip end formation surface 6 is configured by a tip-end-forming flank face 6a and a tip-end-forming wall surface 6b, and the bottom edge 5 is provided at an intersecting ridgeline part between a tip-end-forming flank face 6a of one of the pair of tip end formation surfaces 6, and a tip-end-forming wall surface 6b of the other tip end formation surface 6. A length L of the (tool body) portion T comprising the chip discharge groove(s) 2, the cutting edge(s) 3, the chip breaker groove 4 and the tip end formation surface (s) 6 is from the tip end of the tool body 1 in the direction of the tool rotary axis C to the beginning of the partitioning of the outer peripheral cutting edge 3 by the chip breaker groove 4 on the base end side.

Each of the main constituent parts pertaining to the present example is described in detail below.

Four or more outer peripheral cutting edges 3 (six or seven in the present example) are provided equally partitioned in a circumferential direction, and each is provided in a righttwisting manner. The number of outer peripheral cutting edges 3 is the number before the outer peripheral cutting edge 3 is partitioned by the chip breaker groove 4, and in the present example, the number of outer peripheral cutting edges 3 is the same as the number of chip discharge grooves 2.

Moreover, regarding the setting of a torsion angle α of this outer peripheral cutting edge 3 (angle of crossing the rotary axis C in perpendicular view), when the torsion angle thereof is set to less than 15°, the chip discharge performance decreases, and when the torsion angle is set to greater than 35°, manifestations ("haloing") that appear white when resin and glass cloth included in a workpiece (printed wiring board) detach at the routering end part of the workpiece easily occur. Therefore, to prevent the occurrence of such problems, the torsion angle of the outer peripheral cutting edge 3 of the present example is set from 15° to 35°, inclusive.

Specifically, the torsion angle of the outer peripheral cutting edge 3 is preferably from 20° to 30°, inclusive, and the torsion angle of the outer peripheral cutting edge 3 of the present example is set to 24° or 30°.

Further, the chip breaker groove 4 is provided such that the outer peripheral cutting edge 3 is partitioned by the chip breaker groove 4 at equal pitches along a helical direction of the outer peripheral cutting edge 3.

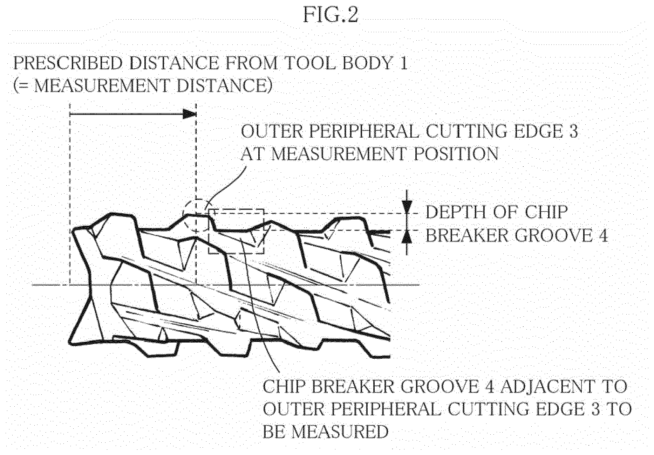

Specifically, the chip breaker groove 4 of the present example is formed in a substantially rectangular shape, and the chip breaker groove 4 is formed as one helical groove in the right twisting direction starting from the tip end of the tool body 1. Regarding the depth of the chip breaker groove 4, a tool diameter direction distance from the outer peripheral cutting edge 3 present at a below-described measurement position to a bottom part of the chip breaker groove 4 adjacent to this outer peripheral cutting edge 3 is defined as the depth of the chip breaker groove 4 (see FIG. 2). In the present example, the depth of the chip breaker groove 4 was measured using the outer peripheral cutting edge 3 and the chip breaker groove 4 adjacent to the base end side of this outer peripheral cutting edge 3 as references.

More specifically, the torsion angle β of the chip breaker groove 4 of the present example is set to 79°-81°, inclusive. The torsion angle setting of the chip breaker groove 4 can be changed, as appropriate, according to a ratio of the length of the outer peripheral cutting edge 3 overlapping a rotation trajectory of this chip breaker groove 4. Moreover, the twisting direction (juxtapositional direction) of the chip breaker groove 4, the groove shape (cross-sectional shape), and quantity are not limited to that of the present example.

In addition, the chip breaker groove 4 of the present example is such that the depth at the groove base end part of the chip breaker groove 4 is set shallower than the depth at the groove tip end part. "Groove base end part" means proximal to the base end of the chip breaker groove 4; i.e., a final end part of the chip breaker groove 4 positioned at a base end side of the tool body 1, and "groove tip end part" means near the tip end of the chip breaker groove 4; i.e., a starting end part of the chip breaker groove 4 positioned at the tip end side of the tool body 1.

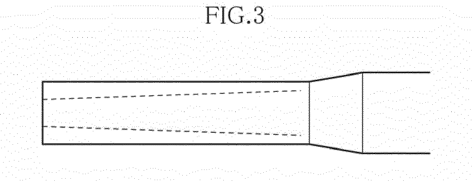

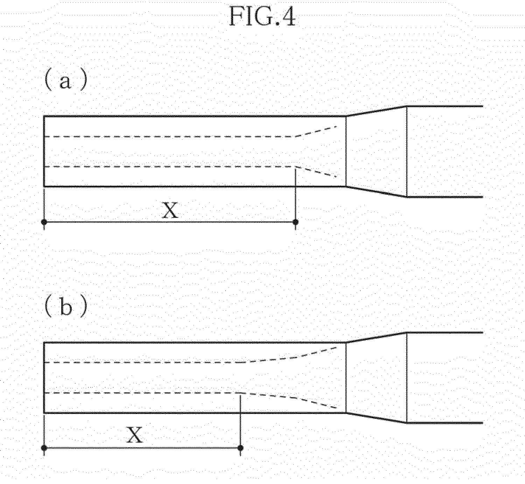

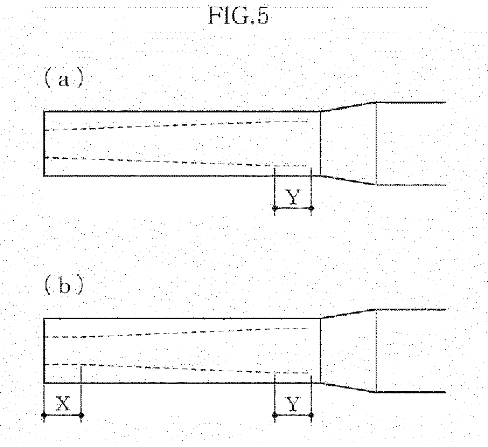

Specifically, the chip breaker groove 4 can be configured in multiple ways, namely, a configuration like that shown in FIG. 3 in which the depth from the groove tip end part to the groove base end part becomes shallower at a constant rate of gradual decrease (depth change amount per unit length in a tool rotary axis C direction for a case in which the depth of the chip breaker groove 4 gradually decreases from the groove tip end part to the groove base end part), configurations like those shown in FIG. 4 in which the depth from the groove tip end part towards the groove base end part is constant in a prescribed range, and then in comparison to this groove tip end side constant depth region section X at which the depth thereof is constant, the depth at the groove base end part side becomes shallower at a prescribed rate of gradual decrease towards the groove base end part, a configuration like that shown in FIG. 5(a) in which the depth from the groove base end part towards the groove tip end part is constant in a prescribed range, and then in comparison to this groove base end side constant depth region section Y at which the depth thereof is constant, the depth at the groove tip end part side becomes deeper towards the groove tip end part at a prescribed rate of gradual increase (depth change amount per unit length in the tool rotary axis C direction for a case in which the depth of the chip breaker groove 4 gradually increases from a groove base end side constant depth region section Y end part to the groove tip end part), and a configuration like that shown in FIG. 5(b) in which the groove tip end side constant depth region section X at which the depth from the groove tip end part towards the groove base end part is constant in a prescribed range, and a groove base end side constant depth region section Y in which the depth from the groove base end part towards the groove tip end part depth is constant in a prescribed range are provided, the depth of groove tip end side constant depth region section X is deeper than that of the groove base end side constant depth region section Y, and the depth between the groove tip end side constant depth region section X and the groove base end side constant depth region section Y becomes deeper towards the groove tip end part at a prescribed rate of gradual increase.

The configuration of the chip breaker groove 4 is not limited to the configurations described above; for example, a configuration may be adopted for which, in the groove tip end side constant depth region section X and/or groove base end side constant depth region section Y, the depth changes such that the change in depth per unit length becomes smaller compared to that in other regions, or a configuration may be adopted in which a plurality of positions at which the depth change amount per unit length is switched (hereinafter, "change points") are present.

Moreover, regarding the change points, there is a possibility that the tool body 1 could suddenly break due to stress during processing of the workpiece when a change amount at a position of the base end side becomes even larger than 96% of a length from the tip end of the tool body 1 to an intersection point located furthest to the base end side from amongst intersection points between the chip breaker groove 4 and the outer peripheral cutting edge 3 (hereinafter, referred to as a chip breaker groove length), and the chip breaker groove 4 abruptly becomes shallow at the base end of the tool body 1. Therefore, to ensure that such problems do not occur, in the present example, the change points are set to a position of 96% (preferably 90% or less) or less of the chip breaker groove length.

Regarding the specific depth of the chip breaker groove 4, if a difference between the depth at the groove tip end part and the depth at the groove base end part is less than 0.020 mm, the effect thereof is not produced even with an above-described configuration of the chip breaker groove 4, the effect being no different from that in prior-art variants. Furthermore, if the difference thereof exceeds 0.055 mm, the volume of the chip breaker groove 4 on the base end side becomes too small, discharging of chips along the chip breaker groove 4 is inhibited, the chip discharging performance declines, and the workpiece will be machined while the outer peripheral cutting edge 3 drags chips accumulated on the processing path inward. Therefore, adverse events such as breakage of the tool body 1 easily occur in association with an increase in cutting resistance, or the chip breaker groove 4 at the tip end side of the tool body 1 becomes too deep, resulting in a decrease in rigidity, and a higher likelihood of adverse events such as breakage of the tool body 1 and poor processing precision. Therefore, to prevent such events from occurring, in the present example, the chip breaker groove 4 is configured such that the difference between the depth at the groove tip end part and the depth at the groove base end part is from 0.020 mm to 0.055 mm, inclusive (preferably, from 0.030 mm to 0.050 mm, inclusive).

The position for measuring the depth of the chip breaker groove 4 at the tip end side (groove tip end part) of the tool body 1 is preferably set to a position further to the base end side than the tip end formation surface 6, the position thereof being one that is not affected by the tip end formation surface 6 that is formed by removal of the tip end part of the tool body 1; in the present example, the measurement position thereof is located 1.5 mm from the tip end of the tool body 1. In other words, the depth of the chip breaker groove 4 at the groove tip end part is measured, referencing the outer peripheral cutting edge 3 present at a position 1.5 mm from the tip end of the tool body, and the chip breaker groove 4 that is adjacent to the base end side of this outer peripheral cutting edge 3.

Being provided so as to partition the outer peripheral cutting edge 3 and assume a prescribed chip breaker groove length, the chip breaker groove 4 may sometimes be formed, at the base end side of the tool body 1, as an incomplete (largely deformed) shape with respect to the shape of the chip breaker groove 4 at the groove tip end part. Therefore, the depth of the chip breaker groove 4 at the base end side (groove base end part) of the tool body 1 is preferably measured at a position that is located at the base end side of the tool body 1 and at which a shape equivalent to the shape of the chip breaker groove 4 at the groove tip end part is maintained; i.e., further to the tip end side than the chip breaker groove length position, and, in the present example, is located away from the tip end of the tool body 1 by a distance amounting to 0.35 mm less than the chip breaker groove length.

In other words, the depth of the chip breaker groove 4 at the groove base end part is measured referencing the outer peripheral cutting edge 3 present at a position that is located away from the tip end of the tool body 1 by a distance amounting to 0.35 mm less than the chip breaker groove length (for example, at 5.65 mm in a router having a chip breaker groove length of 6 mm, which is used in Test 1, described below, and the chip breaker groove 4 that is adjacent to the base end side of this outer peripheral cutting edge 3.

Moreover, in a case in which, like the present example, the depth at the groove base end part of the chip breaker groove 4 is made shallower than the depth at the groove tip end part, and the rigidity of the tool body 1 is improved while also maintaining an effect of suppressing any increase in cutting resistance through this chip breaker groove 4, and in a case in which the diameter of the tool body 1 is smaller than 0.4 mm, the diameter becomes too narrow, and the rigidity of the tool body 1 decreases. Even if the depth at the groove base end part of the chip breaker groove 4 is made shallower than the depth at the groove tip end part, there is a concern that the effect thereof will not be sufficiently exhibited. Moreover, if the diameter is set to a value larger than 1.8 mm, the width of a groove machined in the workpiece increases, and chips are more easily discharged; therefore, it is no longer necessary to make the depth at the groove base end part of the chip breaker groove 4 shallower than the depth at the groove tip end part. Accordingly, the diameter of the tool body 1 at which an effect of improving the rigidity of the tool body 1 is exhibited even while the chip breaker groove 4 is configured as described above, and the effect of suppressing an increase in cutting resistance through this chip breaker groove 4 is maintained, will be 0.4-1.8 mm, inclusive.

Due to being configured as described above, the present example provides a rotary cutting tool R that excels in breakage resistance and chip discharge performance, and enables high precision processing with minimal cutting resistance.

That is, due to the present example assuming a configuration in which the depth of the chip breaker groove 4 changes such that the depth at the groove base end part becomes shallower than the depth at the groove tip end part, the rigidity of the base end side of the tool body 1 can be improved without changing the depth of the chip discharge groove 2 between the base end side and the tip end side of the tool body 1, breakage resistance and processing precision can be improved, and the chip discharge groove 2 can be designed with a large volume due to the improved rigidity, As a result, the chip discharge performance can also be improved.

Accordingly, by using the rotary cutting tool of the present example to machine the outer shape of a printed wiring board or to machine oblong holes therein, adverse effects arising from an increase in cutting resistance can be suppressed as much as possible, and high precision processing can be efficiently implemented, even if processing is implemented under conditions including an increase in the number of stacked material boards and an increase in the feed rate.

In addition, due to the present example assuming a configuration in which the depth of the chip breaker groove 4 can be changed, as appropriate, it is possible to prevent problems that occur when assuming a configuration where the pitch at which the chip breaker groove is provided gradually increases from the tip end side to the base end side of the tool body as with the invention described in Patent Document 2; i.e., problems including an increase in each length of the outer peripheral cutting edge as the pitch of the chip breaker groove is enlarged, an increase in the contact area between the outer peripheral cutting edge and the workpiece, high cutting resistance being encountered even with the presence of a chip breaker groove, breakage of the tool body and a deterioration in processing precision.

Tests (evaluation tests) that substantiate the effect of the present example are indicated below.

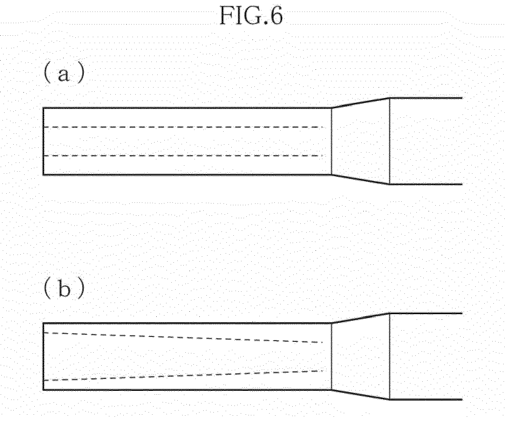

Tests were conducted to evaluate the breakage life (breakage resistance) (Tests 1 and 2), the chip discharge performance (Test 3), and the deviation amount (rigidity) (Test 4) of each prior-art example shown in FIG. 6 (configuration in which the depth of the chip breaker groove 4 is constant or the depth thereof becomes shallower from the groove base end part towards the groove tip end part at a constant rate of gradual decrease (configuration that is equivalent to the above-described tool disclosed in Patent Document 1), or in other words, a configuration in which the depth becomes deeper at a constant rate of gradual increase from the groove tip end part towards the groove base end part) and each present example shown in FIGS. 3-5 (configuration in which the depth at the groove base end part of the chip breaker groove 4 is set to be shallower than the depth at the groove tip end part).

### Test 1: Breakage life evaluation (1)

In Test 1, a router R having a diameter of 1.0 mm and a length L of the (tool body) portion T (comprising the chip discharge grooves 2, the outer peripheral cutting edges 3, the chip breaker groove 4 and the tip end formation surfaces 6), hereinafter chip breaker groove length, of 6.0 mm was used in all of the prior-art examples and present examples. In addition, the cutting conditions and evaluation methods were as follows.

### <Cutting Conditions>

Spindle speed of rotation: 60000 rpm
Feed rate: 0.8 m/min (as a feed rate in a radial direction (tool diameter direction))

### <Evaluation Method>

The breakage life when a workpiece obtained by stacking three heat-resistant glass cloth substrate-epoxy resin laminated boards having a thickness of 1.6 mm was repeatedly machined in a prescribed pattern (zigzag pattern of a total of 40 mm including a horizontal dimension of 10 mm and a vertical dimension of 5 mm) is compared with Test No. 1 (prior-art example: constant depth).

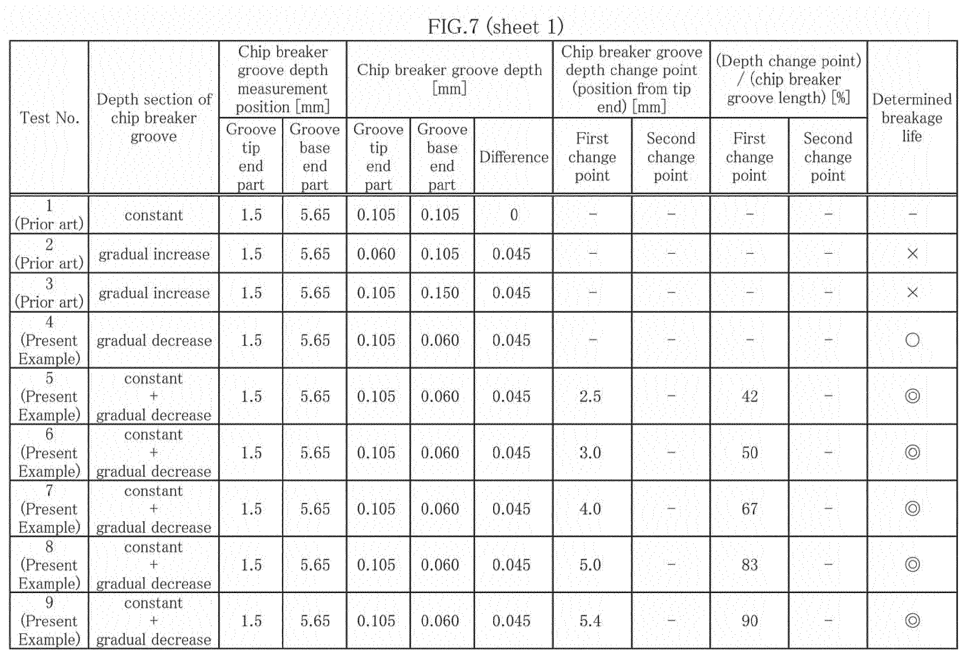

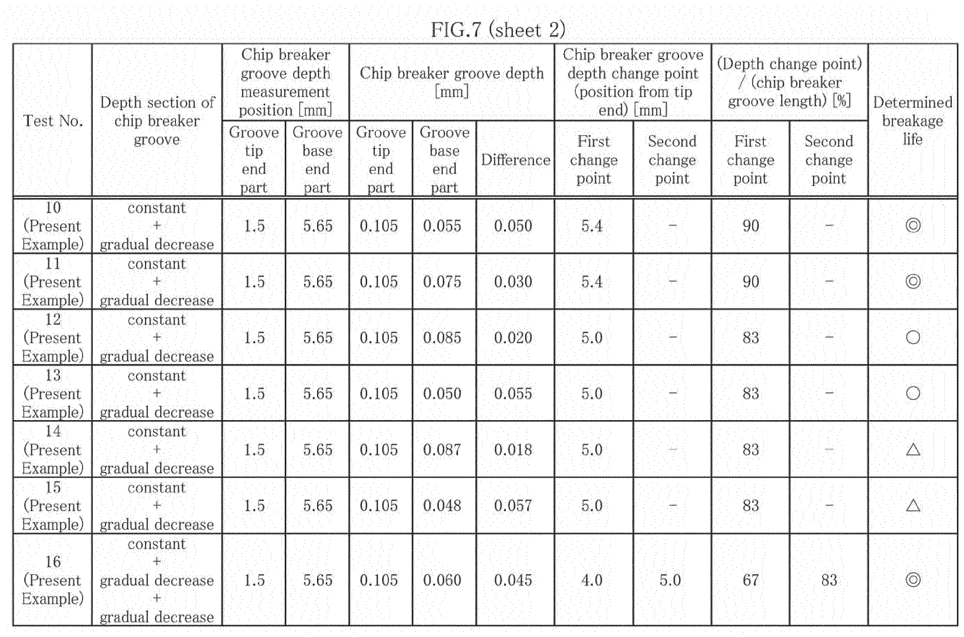

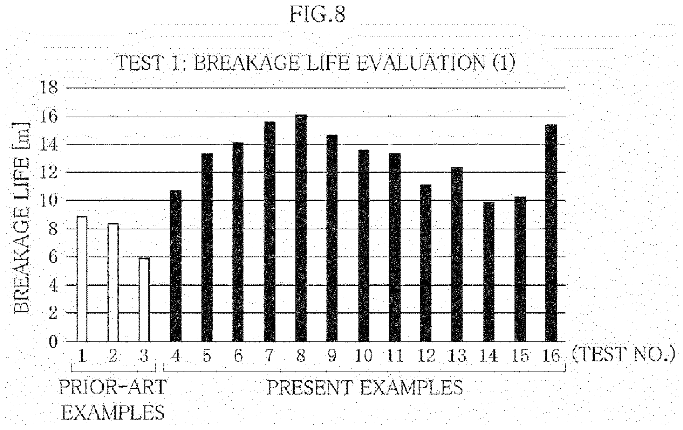

FIG. 7 is a table showing the various settings of the chip breaker groove 4 of the routers of each test number, and the determined breakage life results, FIG. 8 is a graph showing the breakage life of the router of each test number, the determined breakage life results indicated in FIG. 7 are based on a Test No. 1 (prior-art example in which the depth of the chip breaker groove 4 was constant), and a breakage life of no greater than 100% of the breakage life of Test No. 1 is indicated by an "X" symbol a breakage life of greater than 100% but less than 120% is indicated by a triangle, a breakage life of equal to or greater than 120% to less than 150% is indicated by a single circle, and a breakage life of 150% or greater is indicated by concentric circles.

Regarding the depth section of the chip breaker groove indicated in FIG. 7, a router for which the depth of the chip breaker groove 4 was constant (unchanged) from the groove tip end part towards the groove base end part as shown in FIG. 6(a) (Test No. 1: prior-art example) is indicated by "constant", routers for which the depth of the chip breaker groove 4 increased at a constant rate of gradual increase from the groove tip end part towards the groove base end part as shown in FIG. 6(b) (Test Nos. 2 and 3: prior-art examples) are indicated by "gradual increase", a router for which the depth of the chip breaker groove 4 decreased at a constant rate of gradual decrease from the groove tip end part towards the groove base end part as shown in FIG. 3 (Test No. 4: present example) is indicated by "gradual decrease", routers for which, as shown in FIG. 4(a), the depth of the chip breaker groove 4 was constant in a prescribed range from the groove tip end part towards the groove base end part, and then the depth at the groove base end part side decreased towards the groove base end part at a constant rate of gradual decrease such that the depth thereof was shallower than the depth of the groove tip end side constant depth region section X having the constant depth are indicated by "constant + gradual decrease" (Test Nos. 5-15: present examples), and a router for which, as shown in FIG. 4 (b), the depth of the chip breaker groove 4 was constant in a prescribed range from the groove tip end part towards the groove base end part, and then the depth at the groove base end part side was reduced towards the groove base end part at two different rates of gradual decrease such that the depth thereof was shallower than the depth of the groove tip end side constant depth region section X having the constant depth is indicated by "constant + gradual decrease + gradual decrease" (Test No. 16: present example).

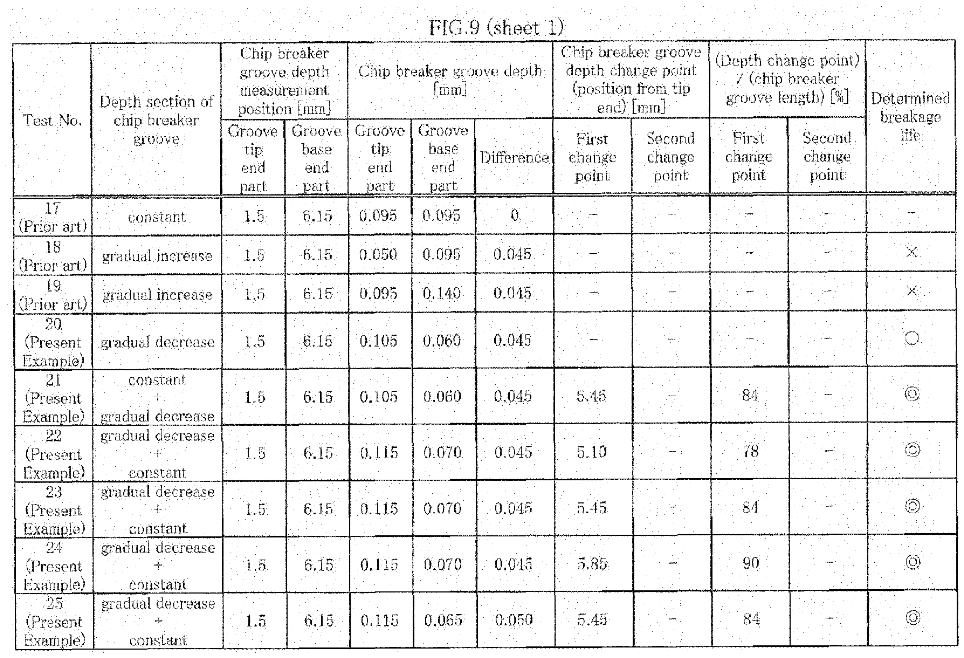

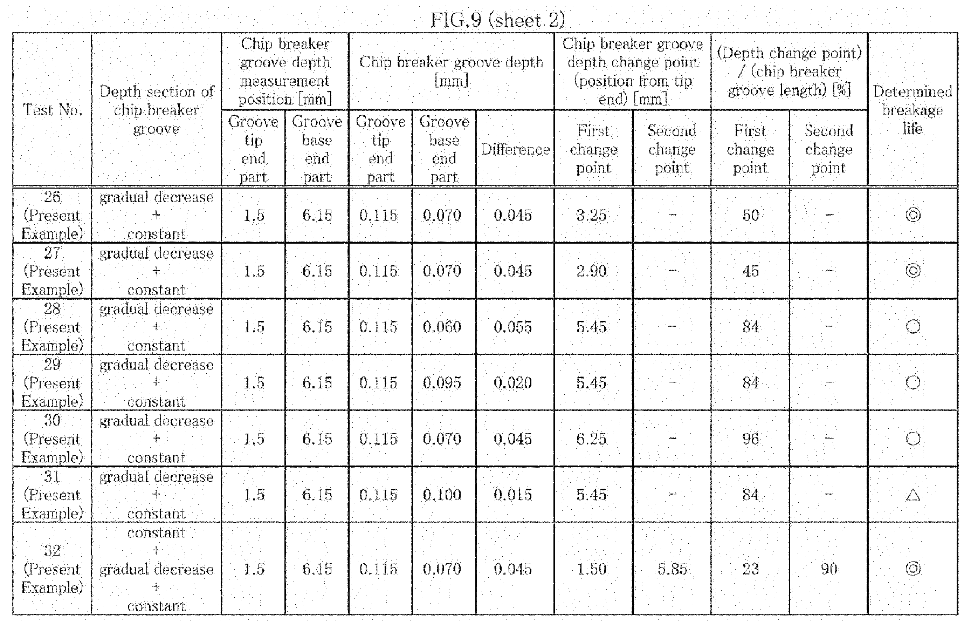

Moreover, regarding the change points, a change point positioned at the groove tip end side is indicated as a "first change point", and a change point positioned at the groove base end side is indicated as a "second change point". This matter is the same in a Test 2 (described below; FIG. 9). a change point is not present for a chip breaker groove 4 depth section that is "constant" or that exhibits a "gradual increase" or a "gradual decrease". For a chip breaker groove 4 depth section that is "constant + gradual decrease", only the first change point is present, and when the depth section thereof is "constant + gradual decrease + gradual decrease", both the first change point and the second change point are present. In FIG. 7, the distances from the tip end of the tool body 1 to the first change point and to the second change point, and the ratios of these distances with respect to the chip breaker groove length are indicated.

As indicated in FIG. 7 and FIG. 8, it was confirmed that the breakage life is favorably improved (prolonged) under all of the conditions of the present examples in relation to the prior-art examples in which the depth of the chip breaker groove 4 was constant or gradually increased from the groove tip end part towards the groove base end part.

Specifically, in Test No. 2 (prior-art example: "gradual increase"), the depth of the groove base end part of the chip breaker groove 4 was the same as that of Test No. 1, but the depth at the groove tip end part was shallower, and as a result, the volume of the chip breaker groove 4 at the tip end side of the tool body 1 was small, and it is thought that the movement of chips passing through the chip breaker groove 4 and discharged to the base end side tended to be inhibited, and thus clogging of chips at the tip end side of the tool body 1 occurred, resulting in an increase in cutting resistance, and therefore the breakage life was shortened.

Moreover, in Test No. 3 (prior-art example: "gradual increase"), the depth of the chip breaker groove 4 at the groove base end part was shallow, and it is thought that the breakage life was shortened because of the reduced rigidity of the tool body 1.

On the other hand, Test No. 4 (present example: "gradual decrease") was configured such that the depth of the chip breaker groove 4 gradually decreased from the groove tip end part towards the groove base end part, and it is thought that thereby an improvement in the breakage life was observed because the substrate volume increased at the base end part of the tool body 1 (substrate portion became thicker) and thus rigidity was improved.

Moreover, in Test Nos. 5-15 (present example: "constant + gradual decrease"), the routers were designed such that the depth of the chip breaker groove 4 was constant in a prescribed range from the groove tip end part towards the groove base end part, and then the depth at the groove base end part side was reduced at a constant rate of gradual decrease towards the groove base end part so as to become shallower than at the groove tip end side constant depth region section X in which the depth was constant, and thereby it is thought that inhibition of the movement of chips at the tip end side of the tool body 1 was reduced, and rigidity at the base end part of the tool body 1 was improved, and an effect of an even higher improvement in the breakage life than that of Test No. 1 (prior-art example: "constant") was observed.

It was confirmed that excellent results were exhibited with Test Nos. 5-13 in which the difference between the depth at the groove tip end part and the depth at the groove base end part was in a range of from 0.020 mm to 0.055 mm, inclusive, and the ratio of the distance from the tip end of the tool body 1 to the first change point, to the chip breaker groove length was 90% or less. Of these, it was confirmed that Test Nos. 5-11, in which the difference between the depth at the groove tip end part and the depth at the groove base end part was in a range of from 0.030 mm to 0.050 mm, inclusive, and the ratio of the distance from the tip end of the tool body 1 to the first change point, to the chip breaker groove length was 90% or less, exhibited particularly excellent results, and it was further confirmed that in Test No. 8 in particular, the breakage life improved significantly by approximately 180% that of Test No. 1 (prior-art example: "constant").

In Test No. 8, it was confirmed that the chip breaker groove 4 maintained a constant depth of 0.105 mm up to the first change point located 5 mm from the tip end of the tool body 1, and the depth of the chip breaker groove 4 at a position of 3.25 mm to the base end side from the tip end of the tool body 1 was also 0.105 mm, said position being midway between the groove tip end side measurement position (located 1.5 mm from the tip end of the tool body 1) at which the depth of the chip breaker groove 4 was measured and the first change point. It was also confirmed that this chip breaker groove 4 was configured such that the depth between the first change point (5.0 mm from the tip end of the tool body 1) and the depth measurement position at the groove base end part (5.65 mm from the tip end of the tool body 1) was reduced by 0.045 mm (rate of gradual decrease was set to 6.9%), the depth of the chip breaker groove 4 at the depth measurement position of the chip breaker groove 4 at the groove base end side (5.65 mm from the tip end of the tool body 1) was 0.06 mm, and the depth of the chip breaker groove 4 at a position of 5.3 mm from the tip end of the tool body 1 between the first change point and the groove base end side measurement position was 0.084 mm.

In the examples other than Test No. 8 and in the prior-art examples, it was confirmed that in regions of the chip breaker groove 4 where the depth section was constant, there was no change in the depth of the chip breaker groove 4 from the groove tip end side to the groove base end side, and in regions in which the depth gradually decreased or gradually increased, the chip breaker groove 4 was formed with the prescribed rate of gradual decrease or rate of gradual increase.

Furthermore, in Test No. 16 (present example: "constant + gradual decrease + gradual decrease"), an improvement effect similar to that of Test Nos. 5-15 (present examples: "constant + gradual decrease") was observed, and it was confirmed that the breakage life improved even in a configuration involving a rate of gradual decrease in the depth of the chip breaker groove 4 as in Test No. 16; i.e., with the change amount per length unit changing at a plurality of locations.

### Test 2: Breakage life evaluation (2)

In Test 2, a router having a diameter of 1.0 mm and a chip breaker groove length (as defined for Test 1) of 6.5 mm was used for all of the prior-art examples and present examples. The cutting conditions and evaluation methods were the same as those of Test 1.

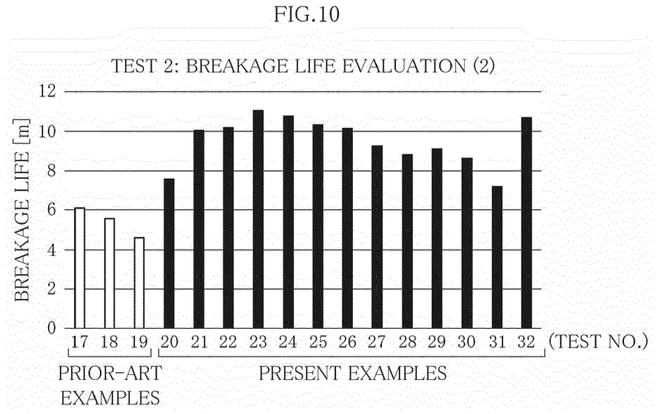

FIG. 9 is a table showing the various settings of the chip breaker groove 4 of the routers in each of the tests, and the results from determining the breakage life, and FIG. 10 is a graph showing the breakage life of the router in each of the tests. Similar to Test 1, the results from determining the breakage life indicated in FIG. 9 are based on Test No. 17 (prior-art example in which the depth of the chip breaker groove 4 was constant) of Test 2, and a breakage life of 100% or less the breakage life of Test No. 17 is indicated by an "X" symbol, a breakage life of greater than 100% but less than 120% is indicated by a triangle, a breakage life of equal to or greater than 120% to less than 150% is indicated by a single circle, and a breakage life of 150% or greater is indicated by concentric circles.

Regarding the depth section of the chip breaker groove indicated in FIG. 9, similar to Test 1, a router for which the depth of the chip breaker groove 4 was constant (no change) from the groove tip end part towards the groove base end part as shown in FIG. 6(a) is indicated by "constant" (Test No. 17: prior-art example), routers for which the depth of the chip breaker groove 4 increased at a constant rate of gradual increase from the groove tip end part towards the groove base end part as shown in FIG. 6(b) are indicated by "gradual increase" (Test Nos. 18 and 19: prior-art examples), a router for which the depth of the chip breaker groove 4 decreased at a constant rate of gradual decrease from the groove tip end part towards the groove base end part as shown in FIG. 3 is indicated by "gradual decrease" (Test No. 20: present example), a router for which, as shown in FIG. 4(a), the depth of the chip breaker groove 4 was constant in a prescribed range from the groove tip end part towards the groove base end part, and then the depth at the groove base end part side decreased towards the groove base end part at a constant rate of gradual decrease such that the depth thereof was shallower than the depth of the groove tip end side constant depth region section X having the constant depth is indicated by "constant + gradual decrease" (Test No. 21: present examples), routers for which, as shown in FIG. 5 (a), the depth of the chip breaker groove 4 was constant in a prescribed range from the groove base end part towards the groove tip end part, and then the depth at the groove tip end part side increased towards the groove tip end part at a constant rate of gradual increase such that the depth thereof was deeper than the depth of the groove base end side constant depth region section Y having the constant depth, or in other words, routers for which the depth of the chip breaker groove 4 became shallower at a constant rate of gradual decrease in a prescribed range from the groove tip end part towards the groove base end part, after which the depth remained constant to the groove base end part are indicated by "gradual decrease + constant" (Test Nos. 22-31: present examples), and a router having, as shown in FIG. 5(b), a groove tip end side constant depth region section X at which the depth of the chip breaker groove 4 from the groove tip end part towards the groove base end part is constant in a prescribed range, and a groove base end side constant depth region section Y in which the depth from the groove base end part towards the groove tip end part depth is constant in a prescribed range, and for which the depth of the groove tip end side constant depth region section X is deeper than that of the groove base end side constant depth region section Y, and the depth between the groove tip end side constant depth region section X and the groove base end side constant depth region section Y increases towards the groove tip end part at a constant rate of gradual increase, or in other words, a router for which the depth between the groove tip end side constant depth region section X and the groove base end side constant depth region section Y decreases towards the groove base end part at a constant rate of gradual decrease, is indicated by "constant + gradual decrease + constant" (Test No. 32: present example).

Moreover, regarding the change points, similar to Test 1, a change point is not present for a chip breaker groove depth section that is "constant" or that exhibits a "gradual increase" or a "gradual decrease", and for chip breaker groove 4 depth sections that are "constant + gradual decrease" or "gradual decrease + constant", only the first change point is present, and when the depth section thereof is "constant + gradual decrease + constant", both the first change point and the second change point are present. Similar to FIG. 7, in FIG. 9, the distances from the tip end of the tool body 1 to the first change point and to the second change point, and the ratios of these distances with respect to the chip breaker groove length are indicated.

As indicated in FIG. 9 and FIG. 10, similar to Test 1, it was confirmed in Test 2 as well that the breakage life is favorably improved (prolonged) under all of the conditions of the present examples in relation to the prior-art examples in which the depth of the chip breaker groove 4 was constant or gradually increased from the groove tip end part towards the groove base end part. That is, it was confirmed that in addition to a configuration in which the depth section of the chip breaker groove 4 was "gradually decreased" as in FIG. 3 and a configuration in which the depth section thereof was "constant + gradual decrease" as shown in FIG. 4(a), even with configurations like those shown in FIG. 5(a), (b) of "gradual decrease + constant" or "constant + gradual decrease + constant", the breakage life is improved.

Specifically, with configurations like those shown in FIG. 5(a) and (b) of "gradual decrease + constant" or "constant + gradual decrease + constant", it was confirmed that excellent results were exhibited in Test Nos. 22-30 and Test No. 32 in which the difference between the depth at the groove tip end part and the depth at the groove base end part was in a range of from 0.020 mm to 0.055 mm, inclusive, and the ratio of the distance from the tip end of the tool body 1 to the first change point, to the chip breaker groove length was 96% or less. Moreover, of these, it was confirmed that Test Nos. 21-27 and Test No. 32 in which the difference between the depth at the groove tip end part and the depth at the groove base end part was in a range of from 0.045 mm to 0.050 mm, inclusive, and the ratio of the distance from the tip end of the tool body 1 to the first change point, to the chip breaker groove length was 90% or less, exhibited particularly excellent results, and it was further confirmed that in Test No. 23 in particular, the breakage life improved significantly by approximately 180% that of Test No. 17 (prior-art example: "constant").

In this Test No. 23, it was confirmed that the rate of gradual decrease of the chip breaker groove from the groove tip end part to the first change point was set to 1.14%, the depth of the chip breaker groove at a depth measurement position at the groove tip end side (1.5 mm from the tip end of the tool body 1) was 0.115 mm, the depth of the chip breaker groove at a position of 3.48 mm from the tip end of the tool body 1, said position being midway between the depth measurement position for the chip breaker groove at the groove tip end side and the first change point, was 0.092 mm, and at the groove base end side, the chip breaker groove became constant at 0.045 mm from the first change point located 5.45 mm from the tip end of the tool body 1, and the depth of the chip breaker groove 4 at a position of 5.8 mm to the base end side from the tip end of the tool body 1, said position being between the first change point and the groove base end side measurement position (6.15 mm from the tip end of the tool body 1) for the depth of the chip breaker groove 4, also became 0.045 mm. In the examples other than Test No. 23 and in the prior-art examples, it was confirmed that in regions of the chip breaker groove where the depth section was constant, there was no change in the depth of the chip breaker groove from the groove tip end side to the groove base end side, and in regions in which the depth gradually decreased or gradually increased, it was confirmed that the chip breaker groove 4 was formed with the prescribed rate of gradual decrease or rate of gradual increase.

### Test 3: Chip discharge performance evaluation

In Test 3, routers from Test No. 17 (prior-art example: "constant") and Test No. 23 (present example: "gradual decrease + constant") that were used in Test 2 were used, and the chip discharge properties when the same distance was machined under the same processing conditions were compared.

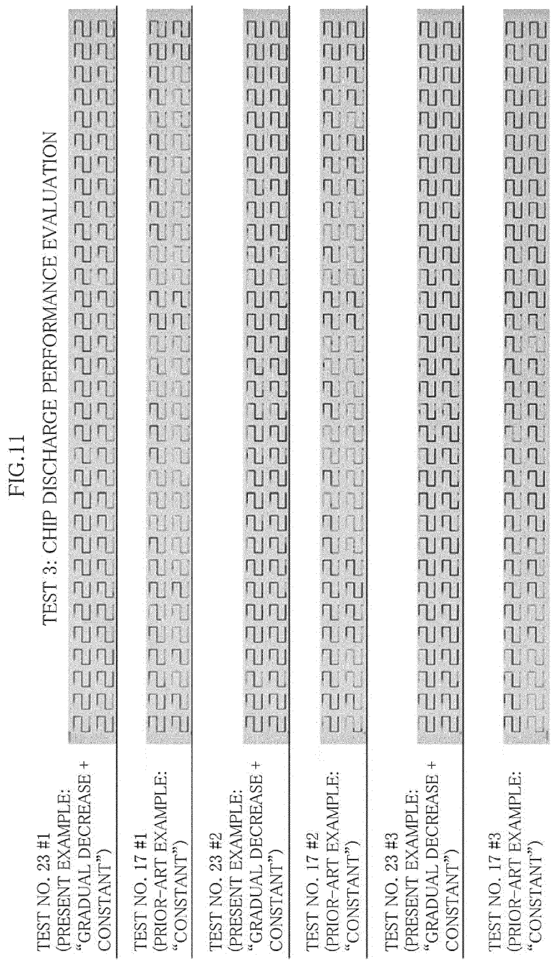

FIG. 11 shows machined workpieces (printed wiring boards) when three samples of each router (#1 to #3) were evaluated. In the figure, locations in the processing path where chips are discharged are shown in black, and locations where chips remain are shown in white.

When the results of Test No. 17 (prior-art example: "constant") and Test No. 23 (present example: "gradual decrease + constant") are compared, with all three samples, the samples of Test No. 23 (present example: "gradual decrease + constant") exhibited more locations shown in black, and thus it was confirmed that Test No. 23 exhibited excellent chip discharge performance.

Chips produced through processing of the workpiece and are discharged through the chip discharge groove 2 from the machined groove, and some pass through the chip breaker groove 4, move to the base end side of the tool body 1, and are ultimately discharged to outside of the machined groove. In Test No. 23 (present example: "gradual decrease + constant"), the chip breaker groove 4 at the tip end side of the tool body 1 was set deeper than that of Test No. 17 (prior-art example: "constant"), and the chip breaker groove 4 was set such that the depth at the base end side of the tool body 1 became constant, and such that the flow of chips through the chip breaker groove 4 was not inhibited by the volume of the chip breaker groove 4 becoming excessively small. Therefore, compared to Test No. 17 (prior-art example: "constant"), it is thought that the chip discharge performance for discharging chips through the chip breaker groove 4 is improved in Test No. 23, and that in general, the chip discharge performance was improved.

### Test 4: Deviation amount (rigidity) evaluation

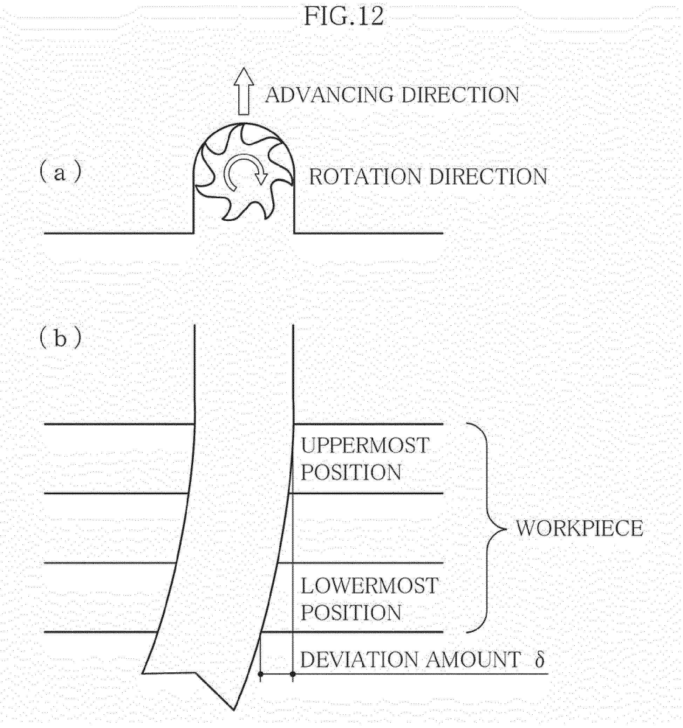

FIG. 12 is a schematic drawing of a router processing a workpiece. FIG. 12(a) is an illustration of the router from the base end side in the tool axial direction, and FIG. 12 (b) is an illustration in the tool diameter direction from the rear side of the router in the advancing direction. Deflection of the tool body 1 as shown in FIG. 12(b) is generated by the effects of tool rigidity and cutting resistance during processing of the workpiece by the router, and when this occurs, a difference in the processing dimensions indicated by a deviation amount δ is generated between the uppermost and lowermost positions of the workpiece. In Test 4, the routers of Test No. 17 (prior-art example: "constant"), Test No. 23 (present example: "gradual decrease + constant"), and Test No. 32 (present example: "constant + gradual decrease + constant"), which were used in Test 2, were used, the deviation amount δ that occurred when a prescribed processing distance (set to 6.4 m in this test) was machined was measured, and the rigidity of each router was evaluated.

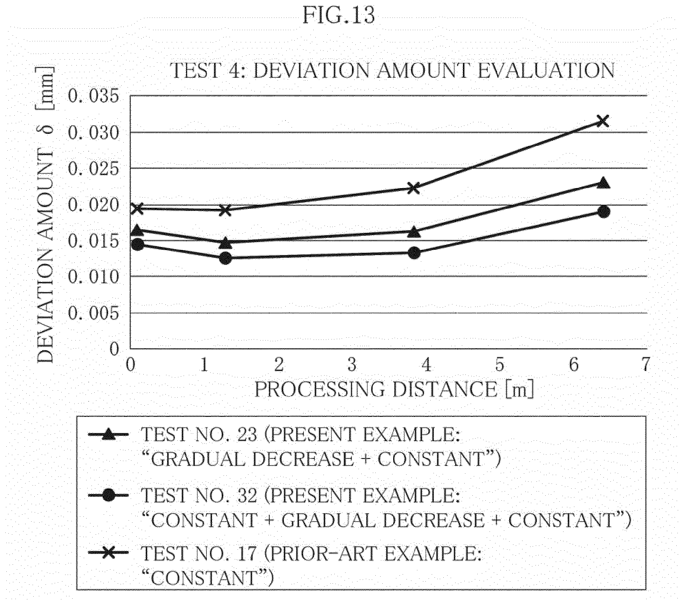

FIG. 13 is a graph showing results obtained by measuring the deviation amount δ at prescribed processing positions (0.08 m, 1.28 m, 3.84 m and 6.4 m in the present example) up to a processing distance of 6.4 m for each router.

As shown in FIG. 13, it was confirmed that, relative to where machining commenced, the deviation amounts δ of Test No. 23 (present example: "gradual decrease + constant") and Test No. 32 (present example: "constant + gradual decrease + constant") were smaller than that of Test No. 17 (prior-art example: "constant"), and that Test No. 32 (present example: "constant + gradual decrease + constant") in particular exhibited excellent results.

In this Test No. 23 (present example: "gradual decrease + constant") and Test No. 32 (present example: "constant + gradual decrease + constant"), compared to Test No. 17 (prior-art example: "constant"), the chip breaker groove 4 at the tip end side of the tool body 1 was set deeper, and the depth of the chip breaker groove 4 at the base end side of the tool body 1 was set shallower. That is, merely setting the chip breaker groove 4 of the tip end side of the tool body 1 to be deep results in a decrease in rigidity of the tool body 1 and an increase in the deviation amount δ. However, by setting the depth of the chip breaker groove 4 at the base end side of the tool body 1 to be shallow as in Test No. 23 (present example: "gradual decrease + constant") and Test No. 32 (present example: "constant + gradual decrease +constant"), rigidity is ensured, and the deviation amount δ is reduced.

Moreover, Test No. 23 (present example: "gradual decrease + constant") and Test No. 32 (present example: "constant + gradual decrease + constant") were set such that the depth of the chip breaker groove 4 was constant at the base end side of the tool body 1, and therefore as indicated in Test 3, the chip discharge performance was good, and an increase in cutting resistance due to the clogging of chips was suppressed. It is also thought that the deviation amount δ was reduced due to the synergistic effect of this cutting resistance being small and rigidity being ensured.

In addition, in Test No. 32 (present example: "constant + gradual decrease + constant"), the groove tip end side constant depth region section X at which the depth of the chip breaker groove 4 was constant was provided at the tip end of the tool body 1, and Test No. 32 thereby exhibited more excellent rigidity at the tip end side of the tool body 1 than Test No. 23 (present example: "gradual decrease + constant"). Therefore, it is thought that curvature at the tip end side of the tool body 1 was suppressed, and thereby Test No. 32 exhibited more excellent rigidity of the overall tool body 1 than that of Test No. 23 (present example: "gradual decrease + constant"), and the deviation amount δ was also smaller than that of Test No. 23 (present example: "gradual decrease + constant").

The present invention is not limited to the present examples, and the specific configurations of each constituent element can be designed, as appropriate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotary cutting tool (R) adapted for use as a router for processing printed wiring boards, in which a chip discharge groove (2) assuming a helical form from a tip end to a base end side of a tool body (1) is formed on an outer periphery of the tool body (1), an outer peripheral cutting edge (3) is formed in an intersecting ridgeline part between a rake face of the chip discharge groove (2) and an outer circumferential surface of the tool body (1) or an outer peripheral flank face formed in the outer periphery of the tool body (1), and a chip breaker groove (4) is provided so as to partition the outer peripheral cutting edge (3), wherein a depth of the chip breaker groove (4) at a base end part of the chip breaker groove (4) is shallower than a depth of the chip breaker groove (4) at a tip end part of the chip breaker groove (4), the rotary cutting tool (R) being **characterised in that** :
a diameter of the tool body (1) is 0.4mm to 1.8mm, preferably 0.8mm to 1.2 mm, e.g. 1.0 mm,
a plurality of four or more outer peripheral cutting edges (3), preferably six to eight outer peripheral cutting edges (3), are provided equally partitioned in a circumferential direction, the number of outer peripheral cutting edges (3) is equal to the number before the outer peripheral cutting edge (3) is partitioned by the chip breaker groove (4), and each outer peripheral cutting edge (3) is provided in a twisting manner with the same twisting direction, right or left, and with an identical torsion angle (α) from 15° to 35°, inclusive, preferably from 20° to 30°, inclusive, preferably e.g. 24° or 30°, and
the chip breaker groove (4) is configured such that a difference between the depth at the tip end part and the depth at the base end part is from 0.020 mm to 0.055 mm, inclusive.

2. The rotary cutting tool according to claim 1, wherein the chip breaker groove (4) is formed in a substantially rectangular shape, and the chip breaker groove (4) is formed as one helical groove in a twisting direction starting from the tip end of the tool body (1) with a torsion angle (β) of from 79° to 81°, inclusive.

3. The rotary cutting tool according to claim 2, wherein the twisting direction of the chip breaker groove (4) is the same as a twisting direction of the outer peripheral cutting edge (3).

4. The rotary cutting tool according to one of claims 1 to 3, wherein a length (L) of a tool body portion (T) comprising the chip breaker groove (4) is from 5.5 times to 7.0 times the diameter of the tool body (1), preferably 6.0 times or 6.5 times.

5. The rotary cutting tool according to one of claims 1 to 4, **characterized in that** the depth of the chip breaker groove from the tip end part towards the base end part becomes shallower at a constant rate of gradual decrease.

6. The rotary cutting tool according to one of claims 1 to 4, **characterized in that** the depth of the chip breaker groove from the tip end part towards the base end part is constant in a prescribed range, and, relative to the tip end side constant depth region section at which the aforesaid depth is constant, the depth at the base end part side becomes shallower towards the base end part at a prescribed rate of gradual decrease.

7. The rotary cutting tool according to one of claims 1 to 4, **characterized in that** the depth of the chip breaker groove from the base end part towards the tip end part is constant in a prescribed range, and, relative to the base end side constant depth region section at which the aforesaid depth is constant, the depth at the tip end part side becomes deeper towards the tip end part at a prescribed rate of gradual increase.

8. The rotary cutting tool according to claim 7, **characterized in that** the chip breaker groove has a tip end side constant depth region section at which the depth from the tip end part towards the base end part is constant in a prescribed range, and the depth of the tip end side constant depth region section is deeper than at the base end side constant depth region section.

## Patentansprüche

1. Rotierendes Schneidwerkzeug (R), das zur Verwendung als ein Nuthobel zur Bearbeitung von Leiterplatten angepasst ist, bei dem eine Spanauswurfnut (2) mit einer Spiralform von einer Spitze zu einem Basisende eines Werkzeugkörpers (1) an einem Außenumfang des Werkzeugkörpers (1) ausgebildet ist, eine Außenumfangsschneidkante (3) in einem Schnittgratlinienteil zwischen einer Spanfläche der Spanauswurfnut (2) und einer Außenumfangsfläche des Werkzeugkörpers (1) oder einer in dem Außenumfang des Werkzeugkörpers (1) ausgebildeten Außenumfangsfreifläche ausgebildet ist und eine Spanbrechernut (4) so vorgesehen ist, dass sie die Außenumfangsschneidkante (3) unterteilt, bei dem
eine Tiefe der Spanbrechernut (4) an einem Basisendteil der Spanbrechernut (4) flacher ist als eine Tiefe der Spanbrechernut (4) an einem Spitzenteil der Spanbrechernut (4),
das rotierende Schneidwerkzeug (R) **dadurch gekennzeichnet ist, dass**:
ein Durchmesser des Werkzeugkörpers (1) 0,4 mm bis 1,8 mm, bevorzugt 0,8 mm bis 1,2 mm, beispielsweise 1,0 mm ist,
eine Mehrzahl von vier oder mehr Außenumfangsschneidkanten (3), bevorzugt sechs bis acht Außenumfangsschneidkanten (3), bei gleichen Intervallen in einer Umfangsrichtung vorgesehen sind, wobei die Anzahl von Außenumfangsschneidkanten (3) gleich der Anzahl vor einer Unterteilung der Außenumfangsschneidkanten (3) durch die Spanbrechernut (4) ist und jede Außenumfangsschneidkante (3) verdreht vorgesehen ist, mit derselben Verdrehungsrichtung, rechts oder links, und mit einem identischen Torsionswinkel (α) von 15° bis 35° einschließlich, bevorzugt von 20° bis 30° einschließlich, bevorzugt beispielsweise 24° oder 30°, und
die Spanbrechernut (4) derart ausgebildet ist, dass ein Unterschied zwischen der Tiefe an dem Spitzenteil und der Tiefe an dem Basisendteil von 0,020 mm bis 0,055 mm einschließlich ist.

2. Rotierendes Schneidwerkzeug nach Anspruch 1, bei dem die Spanbrechernut (4) in einer im Wesentlichen rechtwinkligen Form ausgebildet ist und die Spanbrechernut (4) als eine Schraubennut in einer Verdrehungsrichtung beginnend an der Spitze des Werkzeugkörpers (1) mit einem Torsionswinkel (β) von 79° bis 81° einschließlich ausgebildet ist.

3. Rotierendes Schneidwerkzeug nach Anspruch 2, bei dem die Verdrehungsrichtung der Spanbrechernut (4) dieselbe ist wie eine Verdrehungsrichtung der Außenumfangsschneidkante (3).

4. Rotierendes Schneidwerkzeug nach einem der Ansprüche 1 bis 3, bei dem eine Länge (L) eines Werkzeugkörperteils (T) mit der Spanbrechernut (4) das 5,5-fache bis 7,0-fache des Durchmessers des Werkzeugkörpers (1), bevorzugt das 6,0-fache oder das 6,5-fache, beträgt.

5. Rotierendes Schneidwerkzeug nach einem der Ansprüche 1 bis 4, **dadurch gekennzeichnet, dass** die Tiefe der Spanbrechernut von dem Spitzenteil in Richtung des Basisendteils mit einer konstanten Rate einer allmählichen Verringerung flacher wird.

6. Rotierendes Schneidwerkzeug nach einem der Ansprüche 1 bis 4, **dadurch gekennzeichnet, dass** die Tiefe der Spanbrechernut von dem Spitzenteil in Richtung des Basisendteils in einem vorgeschriebenen Bereich konstant ist und bezüglich des Abschnitts mit konstanter Tiefe auf der Seite der Spitze, in dem die zuvor genannte Tiefe konstant ist, die Tiefe an dem Basisendteil in Richtung des Basisendteils mit einer vorgeschriebenen Rate einer allmählichen Abnahme flacher wird.

7. Rotierendes Schneidwerkzeug nach einem der Ansprüche 1 bis 4, **dadurch gekennzeichnet, dass** die Tiefe der Spanbrechernut von dem Basisendteil in Richtung des Spitzenteils in einem vorgeschriebenen Bereich konstant ist und bezüglich des Abschnitts mit konstanter Tiefe auf der Seite des Basisendes, in dem die zuvor genannte Tiefe konstant ist, die Tiefe an dem Spitzenteil in Richtung des Spitzenteils mit einer vorgeschriebenen Rate einer allmählichen Zunahme tiefer wird.

8. Rotierendes Schneidwerkzeug nach Anspruch 7, **dadurch gekennzeichnet, dass** die Spanbrechernut einen Abschnitt mit konstanter Tiefe auf einer Seite der Spitze aufweist, in dem die Tiefe von dem Spitzenteil in Richtung des Basisteils in einem vorgeschriebenen Bereich konstant ist, und die Tiefe des Abschnitts mit konstanter Tiefe auf der Seite der Spitze tiefer ist als in dem Abschnitt mit konstanter Tiefe auf der Seite des Basisendes.

## Revendications

1. Outil de coupe rotatif (R) destiné à être utilisé comme une défonceuses pour le traitement de cartes de circuits imprimés, dans lequel une rainure d'évacuation des copeaux (2) prenant une forme hélicoïdale d'une extrémité de pointe à un côté d'extrémité de base d'un corps d'outil (1) est formée sur une périphérie extérieure du corps d'outil (1), un bord de coupe périphérique extérieur (3) est formée dans une partie de ligne de crête qui se croise entre une face de coupe de la rainure d'évacuation des copeaux (2) et une surface circonférentielle extérieure du corps d'outil (1) ou une face de flanc périphérique extérieure formée dans la périphérie extérieure du corps d'outil (1), et une rainure de brise-copeaux (4) est prévue de manière à séparer le bord de coupe périphérique extérieur (3), dans lequel
une profondeur de la rainure de brise-copeaux (4) à une partie d'extrémité de base de la rainure de brise-copeaux (4) est inférieure à une profondeur de la rainure de brise-copeaux (4) à une partie d'extrémité de pointe de la rainure de brise-copeaux (4),
l'outil de coupe rotatif (R) étant **caractérisé en ce que** :
le diamètre du corps d'outil (1) est compris entre 0,4 mm et 1,8 mm, de préférence entre 0,8 mm et 1,2 mm, par exemple 1,0 mm,
une pluralité de quatre bords de coupes périphériques extérieurs (3) ou plus, de préférence six à huit bords de coupes périphériques extérieurs (3), sont séparés de manière égale dans une direction circonférentielle, le nombre de bords de coupes périphériques extérieurs (3) est égal au nombre avant que le bord de coupe périphérique extérieur (3) ne soit séparé par la rainure de brise-copeaux (4), et chaque bord de coupe périphérique extérieur (3) est prévue en torsion avec la même direction de torsion, à droite ou à gauche, et avec un angle de torsion identique (α) de 15° à 35° inclus, de préférence de 20° à 30° inclus,
de préférence, par exemple, 24° ou 30°, et
la rainure de brise-copeaux (4) est configurée de telle sorte que la différence entre la profondeur à la partie d'extrémité de pointe et la profondeur à la partie d'extrémité de base est comprise entre 0,020 mm et 0,055 mm, inclusivement.

2. Outil de coupe rotatif selon la revendication 1, dans lequel la rainure de brise-copeaux (4) est formée dans une forme sensiblement rectangulaire, et la rainure de brise-copeaux (4) est formée comme une rainure hélicoïdale dans une direction de torsion à partir de l'extrémité de pointe du corps d'outil (1) avec un angle de torsion (β) de 79° à 81°, inclusivement.

3. Outil de coupe rotatif selon la revendication 2, dans lequel la direction de torsion de la rainure de brise-copeaux (4) est la même que la direction de torsion du bord de coupe périphérique extérieur (3).

4. Outil de coupe rotatif selon l'une des revendications 1 à 3, dans lequel une longueur (L) d'une portion de corps d'outil (T) comprenant la rainure de brise-copeaux (4) est de 5,5 fois à 7,0 fois le diamètre du corps d'outil (1), de préférence 6,0 fois ou 6,5 fois.

5. Outil de coupe rotatif selon l'une des revendications 1 à 4, **caractérisé en ce que** la profondeur de la rainure de brise-copeaux de la partie d'extrémité de pointe vers la partie d'extrémité de base devient moins profonde à un taux constant de diminution progressive.

6. Outil de coupe rotatif selon l'une des revendications 1 à 4, **caractérisé en ce que** la profondeur de la rainure de brise-copeaux de la partie d'extrémité de pointe vers la partie d'extrémité de base est constante dans une plage prescrite et que, par rapport à la section de région de profondeur constante de côté d'extrémité de pointe où la profondeur susmentionnée est constante, la profondeur du côté de partie d'extrémité de base devient moins profonde vers la partie d'extrémité de base à une vitesse prescrite de diminution progressive.

7. Outil de coupe rotatif selon l'une des revendications 1 à 4, **caractérisé en ce que** la profondeur de la rainure de brise-copeaux de la partie d'extrémité de base vers la partie d'extrémité de pointe est constante dans une plage prescrite, et, par rapport à la section de région de profondeur constante de côté d'extrémité de base où la profondeur susmentionnée est constante, la profondeur du côté de partie d'extrémité de pointe devient plus profonde vers la partie d'extrémité de pointe à un taux prescrit d'augmentation graduelle.

8. Outil de coupe rotatif selon la revendication 7, **caractérisé en ce que** la rainure de brise-copeaux a une section de région de profondeur constante de côté d'extrémité de pointe, où la profondeur de la partie d'extrémité de pointe vers la partie d'extrémité de base est constante dans une plage prescrite, et la profondeur de la section de région de profondeur constante de côté d'extrémité de pointe est plus profonde que la section de région de profondeur constante de côté d'extrémité de base.
